# EUROPEAN PATENT APPLICATION

(11) **EP 2 426 319 A2**
(43) Date of publication of application: **07.03.2012**
(21) Application number: 11178571.3
(22) Date of filing: 24.08.2011
(51) Int. Cl.: F01D 11/10, F01D 11/12

(54) **Turbine stage shroud segment with cooling holes**

(30) Priority: 07.09.2010 GB 1014802
(71) Applicant: Rolls-Royce plc, London SW1E 6AT (GB)
(72) Inventor: Tibbott, Ian, Lichfield, Staffordshire WS14 9XW (GB); Ireland, Peter, Derby, Derbyshire DE22 5JW (GB); Rawlinson, Anthony John, Derby, DE73 6UB (GB); Turner, Lynne Helen, Bristol, South Gloucestershire BS35 3NJ (GB)
(74) Representative: Hill, Matthew Ross

(57) **Abstract**

A shroud segment (35) for a turbine stage (31,32) of a gas turbine engine (10) forms an endwall for the working gas annulus of the stage. The segment also provides a close clearance to the tips of a row of turbine blades (32) which sweep across the segment. In use, a mainstream flow of the working gas passes through the passages formed between adjacent turbine blades. The segment (35) has a plurality of cooling holes (61) and respective air feed passages for the cooling holes. The cooling holes are distributed over that part of the gas-washed surface (60) of the segment which is swept by the blade tips. The cooling holes deliver, in use, cooling air which spreads over the gas-washed surface. The feed passages are configured such that the delivered air has swirl directions which are co-directionally aligned with the swirl directions of the mainstream flow at the segment.

## Description

The present invention relates to a shroud segment for a turbine stage of a gas turbine engine.

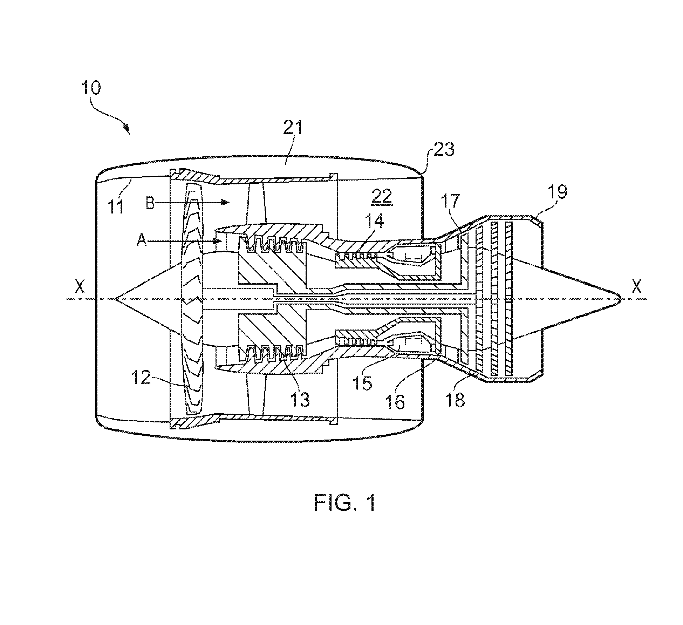

With reference to Figure 1, a ducted fan gas turbine engine generally indicated at 10 has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate-pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 14 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

The performance of gas turbine engines, whether measured in terms of efficiency or specific output, is improved by increasing the turbine gas temperature. It is therefore desirable to operate the turbines at the highest possible temperatures. For any engine cycle compression ratio or bypass ratio, increasing the turbine entry gas temperature produces more specific thrust (e.g. engine thrust per unit of air mass flow). However as turbine entry temperatures increase, the life of an un-cooled turbine falls, necessitating the development of better materials and the introduction of internal air cooling.

In modern engines, the high-pressure turbine gas temperatures are hotter than the melting point of the material of the blades and vanes, necessitating internal air cooling of these airfoil components. During its passage through the engine, the mean temperature of the gas stream decreases as power is extracted. Therefore the need to cool the static and rotary parts of the engine structure decreases as the gas moves from the high-pressure stage(s), through the intermediate-pressure and low-pressure stages, and towards the exit nozzle.

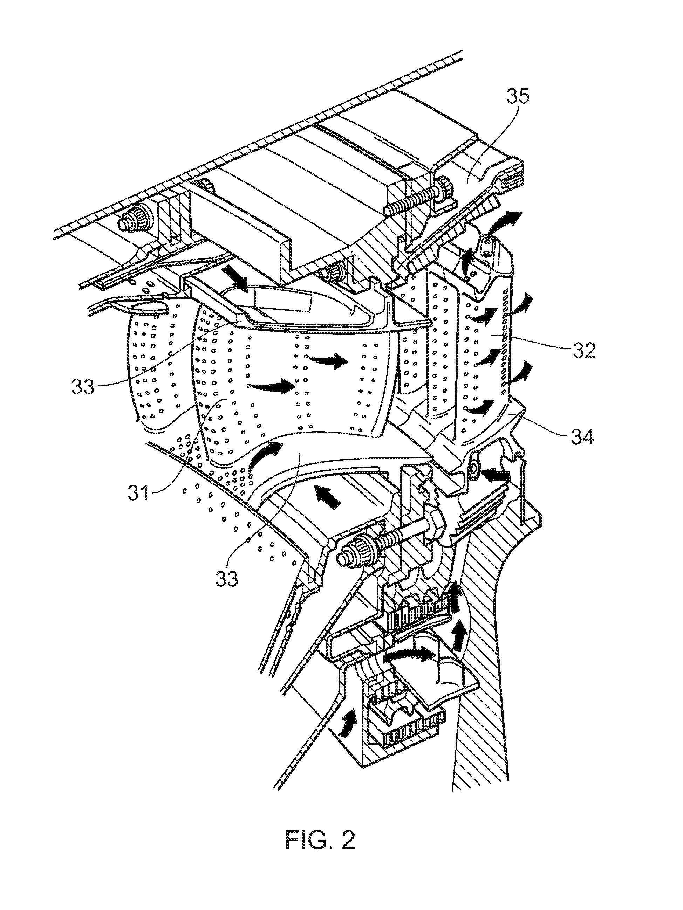

Figure 2 shows an isometric view of a typical single stage cooled turbine. Cooling air flows are indicated by arrows.

Internal convection and external films are the prime methods of cooling the gas path components - airfoils, platforms, shrouds and shroud segments etc. High-pressure turbine nozzle guide vanes 31 (NGVs) consume the greatest amount of cooling air on high temperature engines. High-pressure blades 32 typically use about half of the NGV flow. The intermediate-pressure and low-pressure stages downstream of the HP turbine use progressively less cooling air.

The high-pressure turbine airfoils are cooled by using high pressure air from the compressor that has by-passed the combustor and is therefore relatively cool compared to the gas temperature. Typical cooling air temperatures are between 800 and 1000 K, while gas temperatures can be in excess of 2100 K.

The cooling air from the compressor that is used to cool the hot turbine components is not used fully to extract work from the turbine. Therefore, as extracting coolant flow has an adverse effect on the engine operating efficiency, it is important to use the cooling air effectively.

Ever increasing gas temperature levels combined with a drive towards flatter combustion radial profiles, in the interests of reduced combustor emissions, have resulted in an increase in local gas temperature experienced by the working gas annulus endwalls, which include NGV platforms 33, blade platforms 34 and shroud segments 35 (also known as shroud liners). However, the flow of air that is used to cool these endwalls can be highly detrimental to the turbine efficiency. This is due to the high mixing losses attributed to these cooling flows when they are returned to the mainstream working gas path flow.

One option is to cool the platforms and shroud segments by an impingement flow of cooling air on the back surface of the gas washed wall of the component. For example, a perforated plate spaced from the gas washed wall and supported by pedestals can form impinging jets, and the spent coolant can then flow back into the working gas path at the rear edges of the component. Unfortunately, limited numbers of impingement jets can produce non uniform heat transfer distributions, and the cross flow from spent coolant can reduce the effectiveness of the impingement jets at the more downstream locations of the component. In addition, the need to keep the coolant pressure at a level above that in the working gas path reduces the allowable pressure drop across the impingement jets, and hence the associated heat transfer levels.

Thus, in the case of shroud segments, there has been a move towards the use of abradable coatings that provide a thermal insulating barrier on the gas washed surface of the segment. The corresponding blade tips may have abrasive coatings attached in order to facilitate the cutting of a track into the abradable coating. These coatings have proved effective at reducing the heat flux into the segments. However, their low thermal conductivities introduce a high thermal gradient across the thickness of the coating. Consequently the gas washed surface becomes very hot, and if not protected can increase to a temperature exceeding the sintering temperature limit of the coating material. Similarly, the bond coat that typically attaches the abradable coating to the segment also needs to be kept below a certain temperature to prevent the interface between the coating and the bond coat alloy from oxidizing and prematurely shedding the coating.

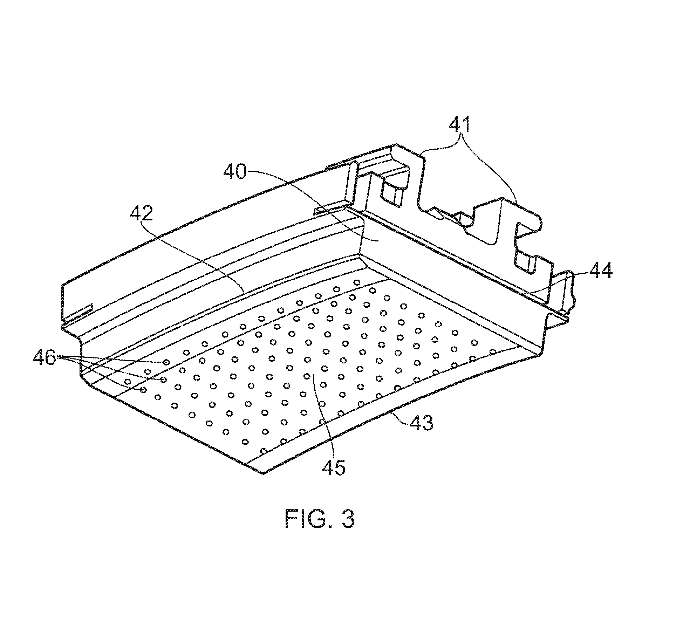

In an attempt to reduce the temperature of the gas washed surface of these coatings, a film of cooled air can be provided between the hot working gas and the coating. This can be achieved by the introduction of effusion cooling onto the surface of the segment. Figure 3 shows an isometric view of a typical shroud segment with an abradable coating and effusion cooling. The segment has a cast alloy body 40, mounting legs 41 for mounting to the turbine support casing, upstream 42 and downstream 43 edges, a feather or strip seal leakage control groove 44, an abradable surface coating 45, and a plurality of effusion cooling holes 46 which deliver streams of cooling air onto the gas washed surface of the surface coating. These streams of cooled air form a protective film on the gas washed surface. However, the film mixes with the hot gas that is adjacent to the surface and progressively heats up as it flows over the surface. This degradation of the film is normally expressed as a "film effectiveness", which typically deteriorates with distance from the holes.

To try to achieve a high level of film effectiveness, it is conventional to introduce the cooling air onto the surface with a low momentum in order to match the momentum of the gas in contact with the wall. If the blowing rate of the film is too high then the film will blow off the surface and mixing between the gas and coolant will be encouraged. The holes can be formed as fan shaped openings in order to diffuse the flow as it exits the hole. The angle of the holes' feed passages is also an important parameter. In general, a shallower angle of the line of the feed passage relative to the gas washed surface (i.e. a smaller radial angle relative to the engine axis) helps to prevent the film from becoming detached from the surface.

Conventional practice has been to provide shallow angle feed passages which increase the lengths of the passages and increase convective heat pickup within the passages. Little consideration has been given to the effect of the direction of the feed passages.

Thus a first aspect of the present invention provides a shroud segment for a turbine stage of a gas turbine engine, the segment forming an endwall for the working gas annulus of the stage, and providing a close clearance to the tips of a row of turbine blades which sweep across the segment, in use a mainstream flow of the working gas passing through the passages formed between adjacent turbine blades. The segment has a plurality of cooling holes and respective air feed passages for the cooling holes, the cooling holes being distributed over that part of the gas-washed surface of the segment which is swept by the blade tips, the cooling holes delivering, in use, cooling air which spreads over the gas-washed surface, and the feed passages being configured such that the delivered air has swirl directions which are co-directionally aligned with the swirl directions of the mainstream flow at the segment. The feed passages are configured such that the delivered-air swirl directions of those cooling holes swept by the trailing edges of the blade tips are rotated towards the axial direction of the engine relative to the delivered-air swirl directions of those cooling holes swept by the leading edges of the blade tips.

Misaligning the delivered air swirl directions relative to the swirl directions of the mainstream flow at the segment can lead to enhanced spreading of the cooling film formed by the delivered air. However, although the spreading can provide good film coverage locally, the level of film effectiveness can then drop of rapidly. In contrast, the present invention is at least partly based on the realisation that co-directionally aligning the delivered air swirl directions relative to the swirl directions of the mainstream flow at the segment can provide better overall film effectiveness.

Configuring the feed passages such that the delivered-air swirl directions of those cooling holes swept by the trailing edges of the blade tips are rotated towards the axial direction of the engine relative to the delivered-air swirl directions of those cooling holes swept by the leading edges of the blade tips can help to better match the delivered-air swirl directions to the local swirl directions of the mainstream flow. This is because, typically, the local direction of the mainstream flow at the trailing edges of the blade tips is rotated towards the axial direction of the engine relative to the local direction of the mainstream flow at the leading edges of the blade tips.

The shroud segment may have any one or, to the extent that they are compatible, any combination of the following optional features.

The line of each feed passage can be defined, relative to the engine axis, by a swirl angle and a radial angle. The swirl angle of the line of the feed passage usually determines (e.g. is usually the same as) the swirl angle of the cooling air delivered out of the corresponding cooling hole and hence the swirl direction of that delivered air. Configuring a feed passage such that the delivered air has a swirl direction which is co-directionally aligned with the swirl direction of the mainstream flow at the segment thus typically involves, for a given position of the cooling hole, setting the swirl angle of the line of the feed passage to provide a desired delivered-air swirl direction.

Preferably, each feed passage is configured such that, at the respective hole, the delivered air has a swirl direction which is co-directionally aligned with the local swirl direction of the mainstream flow to within at least 20°, and more preferably to within at least 15° or 10°.

The feed passages may be configured such that the delivered-air swirl directions of the respective cooling holes encountered when moving in an axial direction of the engine from the cooling holes swept by the leading edges of the blade tips to the cooling holes swept by the trailing edges of the blade tips rotate through an angle in the range of from 10° to 70°, and preferably through an angle in the range of from 25° to 55°, for example 35° to 45°.

The portion of the gas-washed surface which is swept by the blade tips may have at least four, and preferably at least six or eight, axially-spaced and circumferentially-extending rows of cooling holes, each row having a respective delivered-air swirl angle (i.e. the delivered-air swirl directions of all the holes of a given row are rotationally symmetric under rotation about the engine axis). Having more rows of cooling holes allows the delivered air from each hole to be focused on aligning with the direction of the mainstream flow at the segment over a smaller axial distance from each hole. In other words, as variation in direction and strength of the mainstream flow at the segment is generally narrower over smaller axial distances, each hole can be better "tuned" to the local mainstream flow condition. In this way, increased numbers of rows of cooling holes can provide a more effective alignment with the overall mainstream flow at the segment. Preferably, the cooling holes and respective air feed passages of each row are configured such that the delivered air trails from the holes of the row are misaligned with the neighbouring holes of the subsequent downstream row. Misaligning the holes in this way can enhance cooling film coverage.

According to a further aspect of the invention, the cooling holes are arranged in circumferentially extending rows, and at least some neighbouring circumferentially extending rows of holes are circumferentially offset from each other. This may assist in allowing the desired angle and spacing of holes, for example by ensuring that the holes do not overlap with each other. Such an arrangement may also assist in providing improved cooling film coverage.

A further aspect of the present invention provides a gas turbine engine having a turbine stage with shroud segments according to the first aspect.

Another aspect of the present invention provides a method of producing a shroud segment for a turbine stage of a gas turbine engine, the segment forming an endwall for the working gas annulus of the stage, and providing a close clearance to the tips of a row of turbine blades which sweep across the segment, in use a mainstream flow of the working gas passing through the passages formed between adjacent turbine blades;
wherein the method comprises:
performing a computational fluid dynamics calculation to predict the swirl directions at the segment of the mainstream flow of the working gas; and
producing a shroud segment according to the first aspect, the feed passages being configured such that the delivered air has swirl directions which are co-directionally aligned with the predicted swirl directions of the mainstream flow at the segment.

For example, each feed passage can be configured such that, at the respective hole, the delivered air has a swirl direction which is co-directionally aligned with the predicted local swirl direction of the mainstream flow to within at least 30° (and more preferably to within at least 20° or 10°).

Embodiments of the invention will now be described by way of example with reference to the accompanying drawings in which:
Figure 1 shows a schematic longitudinal cross-section through a ducted fan gas turbine engine;
Figure 2 shows an isometric view of a typical single stage cooled turbine;
Figure 3 shows an isometric view of a typical shroud segment with an abradable coating and effusion cooling;
Figure 4 shows aerodynamic streaklines determined for the gas-washed surface of a conventional shroud segment in the absolute frame of reference and for the mainstream flow between passing blades;
Figure 5 shows schematically the gas-washed surface of a shroud segment having cooling holes with feed passage whose swirl angles are all in the same direction;
Figure 6 shows a schematic view of a row of nozzle guide vanes and a following row of rotor blades;
Figure 7 shows a velocity triangle;
Figure 8 shows schematically the gas-washed surface of a shroud segment having cooling holes with feed passage whose swirl angles are co-directionally aligned with the swirl direction of the local mainstream flow;
Figure 9 shows schematically the gas-washed surface of part of a shroud segment having cooling holes with feed passage whose swirl angles are co-directionally aligned with the swirl direction of the local mainstream flow;
Figure 10 shows schematically the gas-washed surface of a shroud segment having cooling holes with feed passage whose swirl angles are co-directionally aligned with the swirl direction of the local mainstream flow;
Figure 11 shows schematically the gas-washed surface of a shroud segment similar to that of Figure 10, but with a staggered hole arrangement;
Figure 12 shows schematically the gas-washed surface of a shroud segment similar to that of Figure 10 and Figure 11, but with the hole arrangement changing progressively from in-line to staggered.

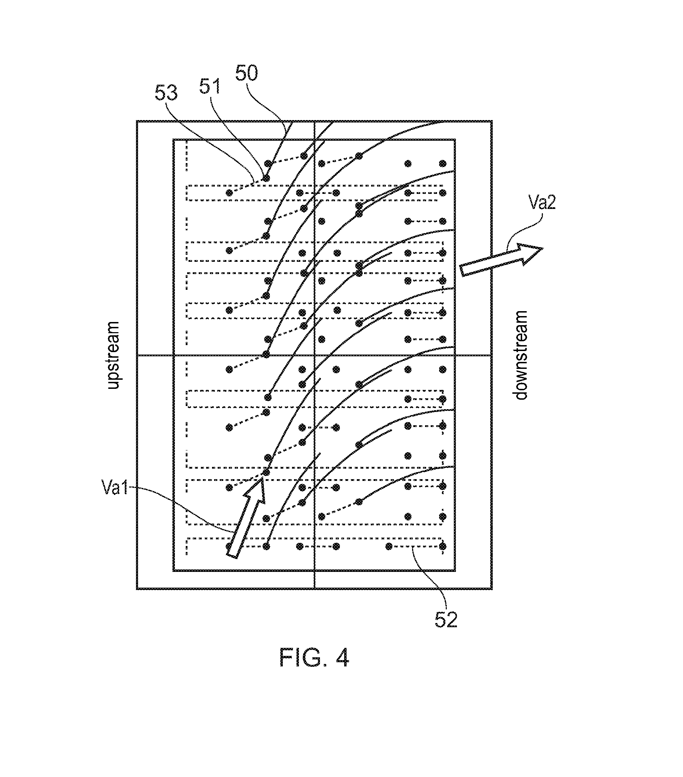

Figure 4 shows aerodynamic streaklines 50 determined for the gas-washed surface of a shroud segment in the absolute (i.e. non-rotating) frame of reference and for the mainstream flow between passing blades. The streaklines originate from cooling holes 51 formed in the gas-washed surface. The block arrows Va1, Va2 indicate the direction of the mainstream flow (ignoring radial components of flow) in the inter-blade passage at respectively the entrance and the exit of the passage. The cooling holes have passages (indicated by broken lines) which feed air to the holes and are either unswirled relative axial direction of the engine (passages 52) or are at a swirl angle to that direction (passages 53). The delivered air forms a cooling film over the gas-washed surface.

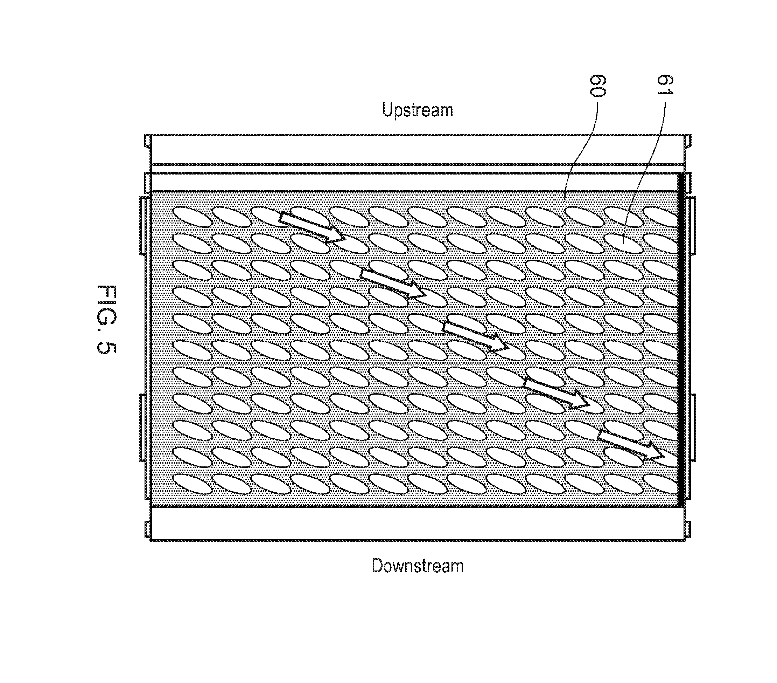

Conventionally, mainstream flow direction information has not been used when determining the orientation of cooling hole feed passages. For example, one conventional approach is to orient the feed passages at a common angle for at least the central holes of the gas-washed surface of the segment. For the holes at the extremities of the surface different feed passage orientations can be selected to facilitate access to the respective holes. Figure 5 shows a cooling hole pattern on the gas-washed surface 60 of a segment. The holes 61 have fan-shaped openings, with the feed passages of the holes being aligned with the long directions of these openings. Thus all the holes deliver the cooling air at the same swirl angle (indicated by the block arrow).

However, at high gas temperatures, such an approach can fail to optimise thermal benefits. In particular, with the increasing use of contoured endwalls, which can substantially reduces secondary flows, cooling films can remain attached to the gas-washed surface over longer distances, and hence film cooling effectiveness becomes an increasingly important consideration.

The present invention therefore proposes a different approach to determining the orientation of cooling hole feed passages which involves assessing the aerodynamic behaviour of the mainstream flow at or near to the gas-washed surface of the shroud segment in the passage between passing blade tips. This assessment can be performed by conducting a 3D Computational Flow Dynamics (CFD) assessment of the flow patterns in the vicinity of the segment, known as flow visualisation. Typically, surface velocity vectors are plotted, and from such information it is possible to determine how the cooling flow can be delivered at similar swirl angles to those of the mainstream gas. Co-directionally aligning the swirl directions of the delivered air and the mainstream flow in this way can produce a more stable and persistent cooling film, with a higher cooling effectiveness.

In particular, in order to position the cooling holes and configure the feed passages in such a manner that the trajectories of the delivered cooling air are optimised from a film cooling viewpoint, it is helpful to know the streamlines of the mainstream flow at the tip of the blade in both the stationary and rotating frame of reference. The cooling holes can then be located in circumferentially extending rows, with the delivered-air swirl direction from each row co-directionally aligned with the direction of the local mainstream flow.

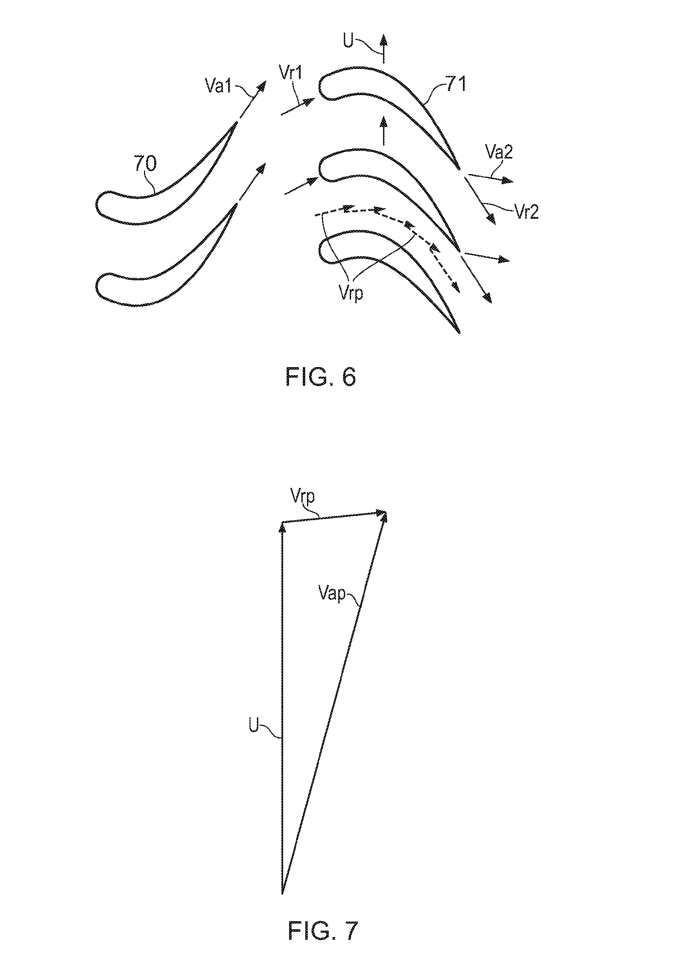

Figure 6 shows a schematic view of the tip regions of a row of nozzle guide vanes 70 and the tip regions of a following row of rotor blades 71 with arrows indicating: (i) the direction of rotation U of the rotor blade tips, (ii) the directions of the mainstream flow Va1, Va2 at the tips in the absolute frame of reference at respectively the entrance and the exit of the row of rotor blades, and (iii) the corresponding directions Vr1, Vr2 of the mainstream flow at the tips in the rotating frame of reference. The directions of the mainstream flow at the tips at different axial positions along the inter-blade passage Vrp in the rotating frame of reference are indicated schematically by the dashed arrows.

For each Vrp, a velocity triangle can be constructed, as shown in Figure 7, Vap representing the resultant mainstream flow vector at the blade tips (i.e. at the endwall formed by the shroud segment) in the absolute frame. Vap is thus the direction of the local cooling flow that would be needed to co-directionally align the cooling flow and the mainstream flow in the stationary frame of reference. The shape of the velocity triangle and hence the direction and magnitude of Vap changes from the front to the rear of the segment as the direction and magnitude of Vrp changes from front to rear. In general, Vap is closer to the axial direction of the engine at the trailing edge of the blade than at the leading edge of the blade.

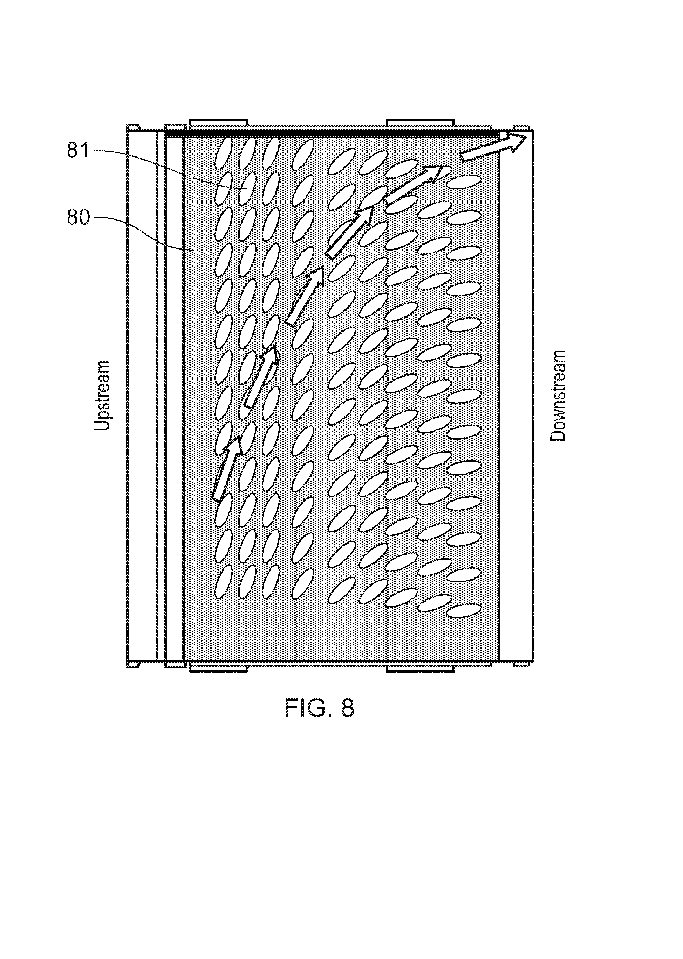

Figure 8 shows schematically the gas-washed surface 80 of a shroud segment. Nine circumferentially extending rows of cooling holes 81 are distributed over that part of the surface which is swept by passing blade tips. The holes 81 have fan-shaped openings, with the respective feed passages that feed cooling air to the holes being aligned with the long directions of these openings. The feed passages are configured such that the cooling air delivered out of the holes is co-directionally aligned with the direction of the local mainstream flow at the segment. The swirl directions (indicated by block arrows) of the holes of the different rows are directed along the local Vap.

Thus the delivered air swirl angle varies from row to row as Vap correspondingly varies in the axial direction. If necessary, e.g. to simplify manufacturing, adjacent rows of holes can share the same delivered air swirl angle, although at least some rows will then provide delivered-air swirl directions which are not so well aligned with the local Vap.

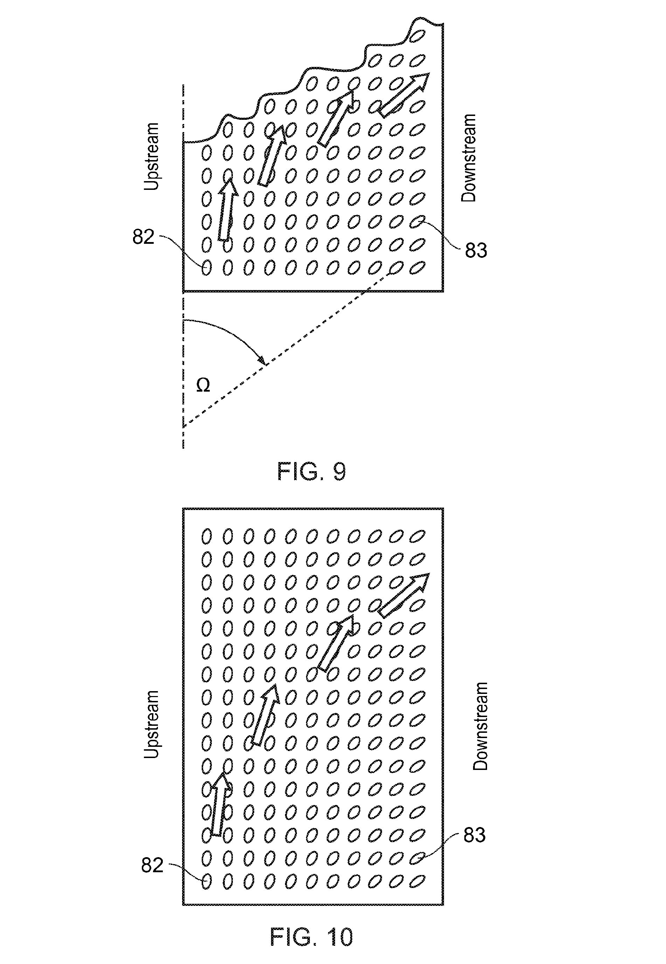

As shown in Figure 9, the cooling holes 82 that are swept by a leading edge of the blade tip (i.e. the upstream cooling holes 82) are at a different angle Ω relative to the local circumferential direction of the shroud to the cooling holes 83 that are swept by the trailing edge of the blade (i.e. the downstream cooling holes). The angle Ω of the upstream cooling holes 82 is less than the angle Ω of the downstream cooling holes 83, indicating that the downstream cooling holes 83 are rotated towards the axial direction relative to the upstream cooling holes 82. Where reference is made herein to the angle of the cooling holes, this may mean the angle of the cooling flow released from the cooling holes.

By way of example, the angle Ω of the upstream cooling holes 82 may be in the range of from 5° to 45°, for example in the range of from 10° to 35°, for example in the range of from 15° to 25°, for example on the order of 20°.

By way of example, the angle Ω of the downstream cooling holes 83 may be in the range of from 40° to 90°, for example in the range of from 50° to 85°, for example in the range of from 60° to 75°, for example on the order of 70°.

The exact angle Ω of both the upstream cooling holes 82 and the downstream cooling holes 83 may depend on, for example, the type of blade, and/or the type of shroud, and/or the type of gas turbine engine, and/or the application of the gas turbine engine.

As noted above, in the described embodiments, the angle Ω may increase in the downstream direction. In some embodiments, the rate at which the angle Ω increases may also increase in the downstream direction.

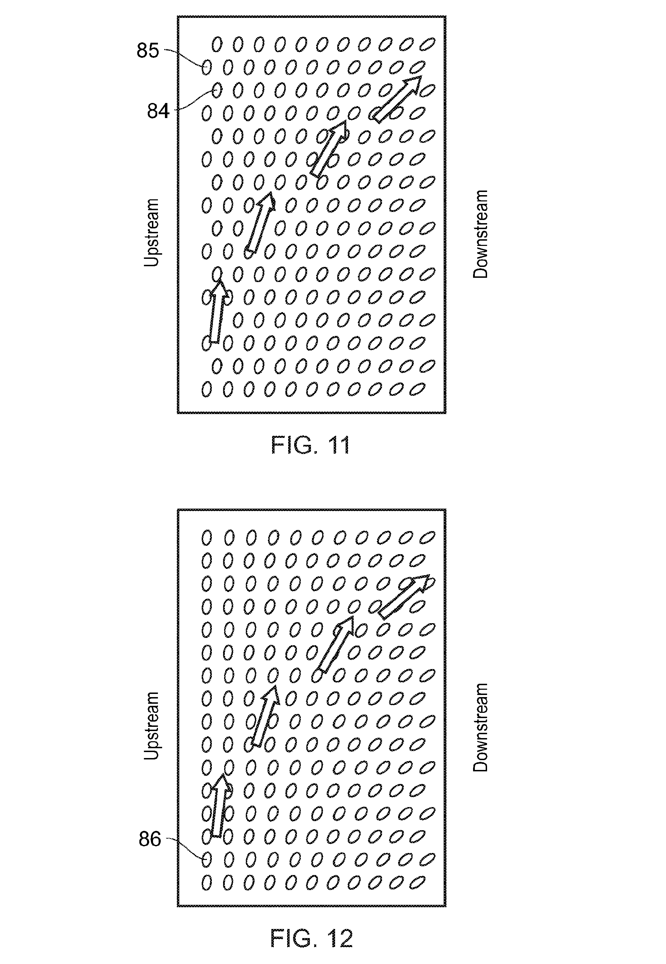

In the embodiments shown in Figures 9 and 10, the holes 82, 83 are arranged in parallel and aligned circumferential rows. However, in alternative embodiments, the holes may be staggered. This means that circumferentially neighbouring holes 84, 85 may be axially offset. This may mean that neighbouring circumferentially extending rows of holes 84, 85 are circumferentially offset from each other. An example of such an arrangement is shown in Figure 11. Such an arrangement may provide better cooling film coverage. It may also enable the holes to have the desired angle and spacing, for example by ensuring that neighbouring holes do not interact (i.e. merge into each other).

An alternative embodiment is shown in Figure 12. In this embodiment, the holes 86 at the upstream end are substantially in-line, i.e. they form aligned circumferential rows, and the holes become increasingly staggered in the downstream direction.

It will be appreciated that any suitable arrangement of holes could be used. It will also be appreciated that the features of the holes 81 discussed herein in relation to Figures 10, 11 and 12 may apply to all embodiments.

The holes may therefore be arranged such that the film trails from the holes of a given row are misaligned with the holes of the next downstream row. This can enhance film coverage. Eventually, however, the film trails tend to merge in the downstream direction. The resulting film thickness can be calculated by assuming additive film superposition. Although there appears to be little time between passing blade tips, velocity vector calculations show that the films can establish themselves and respective film trails can extend for significant distances (typically millimetres) before being wiped away by the passing blade tip.

If the trajectory of the delivered coolant flow is not aligned with and co-directional to the local mainstream flow, then mixing between the film cooling air and the mainstream gas may be increased, with a consequent reduction in cooling effectiveness. Thus any such misalignment is preferably less than about 20°.

The feed passages are typically machined at a shallow angle to the gas-washed surface, so that the ejected air blends with the mainstream gas flow and entrainment is kept to a minimum. The blowing rate of the cooling flow (i.e. (ρv)_{c}/(ρv)_{g} where ρ is density, v is velocity, and the subscripts c and g stand respectively for cooling air and gas] is preferably kept at around a value of one, to help ensure that the film does not separate ("blow off") from the surface. If film blow off occurs, then the film cooling benefit is effectively lost or diminished.

The holes and feed passages can be sized and/or the hole density varied such that higher delivered-air flow rates are produced at axial positions which have higher cooling requirements rates. However, as increasing the coolant flow rate can be detrimental to turbine efficiency, it is advantageous to only increase delivered-air flow rates where they are needed.

Advantageously, by co-directionally aligning delivered air swirl directions relative to the swirl directions of the mainstream flow at the segment, improved film cooling effectiveness can be achieved. This can reduce metal and coating temperatures, leading to improved component durability. Alternatively, the improved film cooling effectiveness can be traded for a reduced coolant flow. Coolant flow reductions and corresponding reductions in mixing losses have a beneficial effect on the stage efficiency of the turbine and ultimately the specific fuel consumption of the engine. While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A shroud segment for a turbine stage of a gas turbine engine, the segment forming an endwall for the working gas annulus of the stage, and providing a close clearance to the tips of a row of turbine blades which sweep across the segment, in use a mainstream flow of the working gas passing through the passages formed between adjacent turbine blades, wherein:
the segment has a plurality of cooling holes (81) and respective air feed passages for the cooling holes, the cooling holes being distributed over that part of the gas-washed surface (80) of the segment which is swept by the blade tips, the cooling holes delivering, in use, cooling air which spreads over the gas-washed surface, and the feed passages being configured such that the delivered air has swirl directions which are co-directionally aligned with the swirl directions of the mainstream flow at the segment; and
the feed passages are configured such that the delivered-air swirl directions of those cooling holes swept by the trailing edges of the blade tips are rotated towards the axial direction of the engine relative to the delivered-air swirl directions of those cooling holes swept by the leading edges of the blade tips.

2. A shroud segment according to claim 1, wherein each feed passage is configured such that, at the respective hole, the delivered air has a swirl direction which is co-directionally aligned with the local swirl direction of the mainstream flow to within at least 20°.

3. A shroud segment according to claim 1 or claim 2, wherein the feed passages are configured such that the delivered-air swirl directions of the respective cooling holes encountered when moving in an axial direction of the engine from the cooling holes swept by the leading edges of the blade tips to the cooling holes swept by the trailing edges of the blade tips rotate through an angle in the range of from 10° to 70°.

4. A shroud segment according to any one of the previous claims, wherein the portion of the gas-washed surface which is swept by the blade tips has at least four axially-spaced and circumferentially-extending rows of cooling holes, each row having a respective delivered-air swirl angle.

5. A gas turbine engine according to claim 4, wherein at least some neighbouring circumferentially-extending rows of cooling holes 84, 85 are circumferentially offset from each other.

6. A gas turbine engine having a turbine stage with shroud segments according to any one of the previous claims.

7. A method of producing a shroud segment for a turbine stage of a gas turbine engine, the segment forming an endwall for the working gas annulus of the stage, and providing a close clearance to the tips of a row of turbine blades which sweep across the segment, in use a mainstream flow of the working gas passing through the passages formed between adjacent turbine blades;
wherein the method comprises:
performing a computational fluid dynamics calculation to predict the swirl directions at the segment of the mainstream flow of the working gas; and
producing a shroud segment according to any one of claims 1 to 5, the feed passages being configured such that the delivered air has swirl directions which are co-directionally aligned with the predicted swirl directions of the mainstream flow at the segment.
